# EUROPEAN PATENT SPECIFICATION

(11) **EP 2 674 290 B1**
(45) Date of publication and mention of the grant of the patent: **03.03.2021**
(21) Application number: 13172082.3
(22) Date of filing: 14.06.2013
(51) Int. Cl.: B29D 99/00, B29C 70/32, B29C 70/54, B29C 70/56, B29C 70/08, B29C 33/42, B29C 70/30, B29C 53/58, B29C 53/82, B64C 1/06, B29L 31/30

(54) **A method and a device for the manufacture of a lightweight structure, and also a lightweight structure**
Verfahren und Vorrichtung zur Herstellung einer Leichtbaustruktur, und Leichtbaustruktur
Procédé et dispositif pour la fabrication d'une structure légère ainsi que ladite structure de construction légère

(30) Priority: 14.06.2012 DE 102012210043; 14.06.2012 US 201261659459 P
(43) Date of publication of application: 18.12.2013
(73) Proprietor: Airbus Operations GmbH, 21129 Hamburg (DE); Deutsches Zentrum für Luft- und Raumfahrt e.V., 51147 Köln (DE)
(72) Inventor: Müller, Markus, 21129 Hamburg (DE); Jörn, Paul, 21129 Hamburg (DE); Ströhlein, Tobias, 38110 Braunschweig (DE); Niemann, Steffen, 38440 Wolfsburg (DE); Hühne, Christian, 30173 Hannover (DE); Kleineberg, Markus, 30966 Hemmingen (DE)
(74) Representative: LKGLOBAL Lorenz & Kopf PartG mbB Patentanwälte

(56) References cited:
- EP-A2- 0 409 354
- WO-A1-2012/045871
- DE-A1- 3 739 753
- US-A- 5 200 251
- US-A- 6 050 315
- US-A1- 2010 108 246

## Description

The invention concerns a method for the manufacture of an integrally reinforced lightweight structure with a fibre-reinforced plastic, in particular of a fuselage barrel or a shell component of an aircraft, by means of a moulding tool, wherein the lightweight structure has a multiplicity of stiffening ribs crossing one another at node points, wherein a skin is attached to the stiffening ribs and the moulding tool has a multiplicity of channel-type depressions for purposes of creating the stiffening ribs.

In addition the disclosure concerns a device for the manufacture of an integrally reinforced lightweight structure with a fibre-reinforced plastic, in particular of a fuselage barrel or of a shell component of an aircraft, by means of a moulding tool, wherein the lightweight structure has a multiplicity of stiffening ribs crossing one another at node points, wherein a skin is attached to the stiffening ribs and the moulding tool has a multiplicity of channel-type depressions for purposes of creating the stiffening ribs.

Furthermore the invention concerns a lightweight structure, in particular a fuselage barrel or a shell component for an aircraft, which is formed with a fibre-reinforced plastic by means of a moulding tool, wherein the integrally reinforced lightweight structure has a multiplicity of stiffening ribs crossing one another at node points.

In the conventional aluminium form of construction the fuselage cells of aircraft are, for example, manufactured using the so-called "four shells form of construction". Here a lower shell, two side shells, and an upper shell are combined into an approximately cylindrical hollow fuselage section, i.e. a so-called "fuselage barrel". The aircraft fuselage cell is assembled from a plurality of fuselage sections positioned, aligned and attached one behind another. The stiffening of the fuselage sections, i.e. of the aircraft fuselage cell formed from the latter, is undertaken by stringers running in the longitudinal direction and frames arranged in the peripheral direction, which are attached with one another and with a skin forming the outer shell using connecting feet. The connection of the stringers and the frames made up from frame segments is undertaken by means of stringer and frame couplings. By virtue of the large number of parts and connection elements necessary for this purpose this form of construction requires a high production resource.

For purposes of further reduction of the weight structural components, such as, for example, aircraft fuselage cells or lifting surfaces are being produced with ever-larger components made from fibre-reinforced plastics (FRPs).

Fuselage barrels manufactured using the winding method from preimpregnated fibre-reinforced plastics in web-form, which are internally reinforced with a regular grid network of stiffening elements (a so-called "isogrid") enable an effective utilisation of the load-bearing potential of the FRPs.

From US 5,814,386 amongst other features a fuselage section manufactured using the winding method is of known art; internally this is reinforced with integrally designed stiffening elements that are arranged in an essentially regular grid structure. An approximately cylindrical winding mandrel serves to produce this fuselage barrel; the mandrel is provided with a jacket made from an elastic material, such as, for example, rubber or polyurethane. A multiplicity of rectangular grooves is let into the jacket; these run in a spiral shape with reference to an axis of symmetry of the winding mandrel. Continuous, unidirectional reinforcement fibres (filaments) are firstly laid down in the grooves for purposes of manufacturing the stiffening ribs, after the fibres have previously passed through a resin bath, wherein additional vibration-reducing damping layers are also laid in with the fibres. Moreover, with the aid of the damping layers any excess resin can be pushed out at the crossing points, and the individual layers can be laid down with a defined applied pressure. For purposes of completing the skin the total structure is then wound with a reinforcement material, if required again impregnated with a polymer binding agent, and finally cured, and, in the case of thermoplastic binding agents, resolidified. The damping layers are vulcanised into the structure and remain in the latter. In conclusion the wound part is completed by the removal of the winding core and the rubber jacket.

Furthermore from WO 2009/109564 A2 a plate-form lightweight structure is of known art, as is a method for its manufacture. A first plate is provided with a multiplicity of grid-type grooves. A preformed grid of matching design, made from dry reinforcement fibres, can be laid into this regular or irregular grooved grid. The structure is then covered with a second smooth plate for purposes of creating a plane outer face. In a final step of the method, the grid of reinforcement fibres located between the plates is infiltrated with a curable plastic material, including all cavities present, at the same time with the filling of any air inclusions, and cured.

EP 0 409 354 A2 shows a method of forming a three-dimensional composite structure is disclosed wherein uncured portions of the composite structure are first assembled between an initially rigid heat-softenable layer of ABS plastic and a hard mould surface.

US 5 200 251 A discloses a filament wound composite structure, its tooling and method of manufacture.

US 2010/0108246 A1 shows a method comprising: a first stage in which the layers of the prepreg are spread over a mold having cavities corresponding to reliefs of the complex geometry panel to be obtained, the layers of prepreg presenting lines of discontinuity in the vecinity of the reliefs; a second stage in which the stack is done by application of a cycle of pressure and temperature; and a third stage of finishing of the panel to be obtained, comprising the curing of the prepreg.

DE 37 39 753 A1 shows a process for producing components from fibre-reinforced plastics, in particular components which are reinforced with stringers or ribs.

WO 2012/045871 A1 discloses a composite for an aircraft or spacecraft, comprising: a skin portion; a stringer which is attached to the skin portion; and a former made from fibre composite material.

US 6,050,315 A1 shows a method and apparatus for the manufacture of fiber reinforced structures wherein tooling and a delivery head are employed for the placement of discrete, elongated fiber elements.

The object of the present invention is therefore to specify a method for the manufacture of a lightweight structure formed with a fibre-reinforced plastic with integral peripheral and diagonal stiffening elements, in particular with an optimised connection to a skin, which method moreover permits a production process that can be automated to a large extent and at the same time is reliable.

In addition it is an object of the invention to specify a device for the production of such a lightweight structure, and to specify such a lightweight structure with integral peripheral and diagonal stiffening ribs.

This object is achieved in the first instance by means of a method in accordance with Claim 1 with the following steps:
a) laying down in at least some regions of at least one intermediate layer and at least one reinforcement layer into the depressions, wherein the at least one reinforcement layer is severed before at least one node point and behind the node point in the region of the groove is restored, or the at least one reinforcement layer is severed before at least one node point and behind the node point in the region of the groove is restored, or that at least one recess is introduced into the at least one intermediate layer in the region of the at least one node point in at least some regions.
b) repetition of step a) until the depressions are at least partially filled with intermediate layers and reinforcement layers for purposes of forming the stiffening ribs with integral connecting feet,
c) population of the moulding tool, in particular with intermediate layers and/or reinforcement layers, for purposes of manufacturing the skin, and
d) curing and/or solidification of the intermediate layers and reinforcement layers.
wherein, the at least one depression is formed with a groove with two side walls and a groove edge zone is attached in at least some sections to at least one side wall, wherein the grooves have an approximately trapezoidal cross-sectional geometry while the groove edge zones formed in mirror-images on the two sides of the grooves have an approximately triangular or wedge-shaped cross-sectional geometry and groove edge zones undergo a smooth, i.e. stepless, transition into a surface of the moulding tool, wherein the reinforcement layers are laid down in the groove, and the intermediate layers are laid down in the groove and in the at least one adjacent groove edge zone, wherein the stiffening ribs are formed with a multiplicitv of reinforcement layers and intermediate layers laid down one upon another.

A surface of the moulding tool can have a plane surface geometry, a singly or a doubly (spherically) curved surface geometry, or any combination of the geometries cited. The laying down of the reinforcement layers and the intermediate layers on the moulding tool is undertaken, for example, with the aid of automatic placement heads. Here the moulding tool can be traversed or rotated with reference to the placement heads, and/or the placement heads are positioned relative to the moulding tool.

In accordance with the method stiffening ribs can be manufactured formed integral with the skin, which ribs in the case of, for example, a hollow cylindrical moulding tool, can run essentially in its peripheral direction and also diagonally, and which are attached internally onto the skin with connecting feet, i.e. so-called "T-feet". In the case of a singly or a doubly curved, but not a hollow cylindrical moulding tool, the stiffening ribs can likewise run diagonally and/or at right angles to a longitudinal axis of the moulding tool. By virtue of stiffening ribs that are preferably arranged in an irregular, essentially non-orthogonal, grid structure (a so-called "anisogrid") a reinforcement of the lightweight structure ensues that is aligned with the load field, and is able to exploit the load-bearing potential of modern FCPs. As a consequence of the integrally formed connecting feet of the stiffening ribs (a so-called "advanced anisogrid") the load-bearing capacity of the lightweight structure is further increased. Here the connecting feet can in at least some sections be integrally formed on one or both sides onto essentially vertical webs of the stiffening ribs, such that the stiffening ribs have an approximately T-shaped, L-shaped, or rectangular cross-sectional geometry. The reinforcement layers are preferably encased by the intermediate layers, as a result of which a high resistance of the lightweight structure to impacts from foreign bodies (so-called "impact behaviour") ensues. The connecting feet preferably have a harmonic layer run-out, as a result of which an improved "damage tolerance" behaviour ensues. Depressions configured to differing depths in the moulding tool enable differing heights for the stiffening ribs, in particular in regions of the grid structure, in which the area moment of inertia must be varied, such as, for example, in the peripheral direction of the fuselage, in regions of load introduction, larger bolted areas, and similar.

In addition the method can advantageously be automated to a high degree, and at the same time can be embodied in a reliable process.

In step a) of the method multidirectional intermediate layers in web-form are firstly laid down into the depressions of the moulding tool, so as to form the connecting feet of the stiffening ribs. In parallel alternating narrow reinforcement layers in strand-form, i.e. strip-form, are introduced into the depressions; these layers are preferably equipped with reinforcement fibres that have a fibre orientation of 0° (unidirectional material). In accordance with step b) of the method this procedure is repeated until the depressions are completely filled with intermediate layers and reinforcement layers, wherein it is preferably an intermediate layer that is the last to be laid down, in particular so as to increase the resistance to invasive foreign bodies at high velocity. Preferably at least one reinforcement layer is in each case alternately laid down on at least one intermediate layer, wherein the intermediate layers preferably form the outer surfaces of the laminate structure. A laying down procedure that deviates from the latter is also possible. A lightweight structure with the stiffening ribs crossing one another diagonally can, for example, be laid down with the aid of the placement heads on a plane, singly curved, or doubly curved moulding tool, or on a moulding tool that has a combination of two of the surface geometries cited. Furthermore the lightweight structure can be manufactured using the winding method with a rotating moulding tool and/or at least one placement head guided around the moulding tool, wherein a multiplicity of stiffening ribs are formed on the lightweight structure running essentially in the peripheral direction of the rotary moulding tool, as are stiffening ribs running diagonally relative to a longitudinal axis of the moulding tool. In step c) of the method the final laying down on the moulding tool of a material formed with a suitable FRP is undertaken so as to form the skin. The semi-finished products that have already been used for the reinforcement layers and the intermediate layers are preferably deployed for this purpose. In the final step d) of the method the curing and/or solidification of the intermediate layers and the reinforcement layers is undertaken to form the integrally stiffened lightweight structure. In the context of the present description the term "curing" refers to the curing of thermosetting FRPs, while the term "solidification" signifies the hardening, i.e. resolidification of thermoplastic FRPs by cooling after their previous plasticisation as a result of heating. For final completion of the process further method steps can be required, for example, removal of the moulding tool, and mechanical finishing operations on the lightweight structure. The stiffening ribs run at an angle of between 90° and 0° relative to a longitudinal axis of the moulding tool, i.e. relative to a longitudinal axis of the lightweight structure. Here each of the limiting values of 0° und 90° is included.

In accordance with the method provision is made for the at least one depression to be formed with a groove with two sidewalls, and for a groove edge zone to be attached to at least one sidewall in at least some sections, wherein the reinforcement layers are laid down in the groove, and the intermediate layers are laid down in the groove and in the at least one adjacent groove edge zone.

With the aid of the groove edge zones, preferably attached in each case to the sidewalls of the grooves, it is possible to form connecting feet integrally with the stiffening ribs, which then have an approximately T-shaped cross-sectional geometry. Alternatively only one groove edge zone can be provided on one sidewall of the groove, so as to manufacture stiffening ribs with an L-shaped cross-sectional geometry. If no groove edge zones are formed on the grooves, in at least some sections, it is possible to form stiffening ribs with an approximately rectangular cross-sectional geometry. In a further advantageous configuration of the Method the reinforcement layers are laid down in the grooves under mechanical stress, and/or the intermediate layers are fixed in the region of the groove edge zones.

By this means during the winding process a pressure is built up directed radially inwards so as to fix the location of the semifinished product in web-form, and so as to compact the laminate structure, in particular so as to avoid undulations, cavities and air inclusions. As a consequence of the fixing of location the intermediate layers cannot slip and be pulled into the grooves by the reinforcement layers. The fixing of location can be undertaken, for example, with a spray adhesive or by means of a binding agent e.g. a thermoplastic binding agent, already present in the semifinished products. Furthermore a mechanical clamping device can be provided.

The method envisages that the at least one reinforcement layer is severed ahead of at least one node point and is restored behind the node point in the region of the groove, or that the at least one reinforcement layer passes through the at least one node point unsevered.

By this means a layer-doubling, i.e. thickening, at the node points, i.e. the crossing points, can be avoided, whence an approximately constant fibre volumetric content ensues in the stiffening ribs, including the node points. In accordance with a further advantageous configuration of the method provision is made for the at least one reinforcement layer to be severed ahead of at least one node point, and to be restored behind the node point in the region of the groove, or for at least one recess to be introduced into the at least one intermediate layer in the region of the at least one node point, in at least some regions.

By this means a crossing of the intermediate layers is enabled that in the individual case is free of layer-doublings. In the case of a rectangular crossing, by way of example, between two intermediate layers crossing one another at least one intermediate layer at the node point can, for example, be cut on the mitre and by this means completely severed. The at least one recess is cut into at least one intermediate layer at at least one node point in at least some regions, as a result of which a crossing of the intermediate layers can be achieved that is free of layer-doublings in at least some regions.

By means of a local termination, i.e. the severance and resumption, or restoration, of the reinforcement layers and/or of the intermediate layers, a non-continuous profile of the reinforcement fibres or filaments ensues in the reinforcement and/or intermediate layers within the moulding tool, i.e. within the lightweight structure. As a result shorter or longer sections of the reinforcement layers and/or of the intermediate layers are simply laid down in the grooves and the groove edge zones in accordance with the method.

In accordance with a further advantageous configuration of the method provision is made for the reinforcement layers to be formed with a semifinished product in strand-form, which is formed with a fibre-reinforced plastic material and/or with a metallic material.

The semifinished product in strand-form can, for example, be manufactured with narrow weaves or mats in strip-form, or with strands of carbon fibres (so-called rovings, i.e. unidirectional material (UD)), glass fibres, Kevlar fibres, Aramide fibres, and/or other plastic fibres. At the time at which they are laid down the reinforcement fibres can already be preimpregnated with a plastic material (so-called prepreg material) or can be untreated, i.e. still dry at the time at which they are laid down. Furthermore the reinforcement fibres can be held together with a binding agent, which in addition can serve to fix the location of the reinforcement layers in the depressions of the moulding tool. Polymers, such as for example thermoplastics or adhesives, can serve as the binding agents or adhesive agents.

Thermosetting plastics, such as for example epoxy resins or high-performance thermoplastics preferably find deployment for purposes of infiltration, i.e. as the matrix material for the reinforcement fibres. The fibre orientations in the strand-form semifinished product are 0° - with reference to its longitudinal axis, in particular so as to improve the drapability and to enable the laying down procedure to be free of creases. Furthermore the strand-form semifinished products, i.e. the reinforcement layers formed from these, can contain metallic materials, in particular thin layers of foils, networks, weaves or wires made from lightweight metals, such as, for example, aluminium alloys or titanium alloys.

In a further configuration of the method provision is made for the intermediate layers to be formed with a semifinished product in web-form, which is formed with a fibre-reinforced plastic material and/or with a metallic material, and which has a width that enables the grooves and the groove edge zones to be covered in at least some regions.

The fibre orientations in the web-form Multidirectional semifinished product ("multidirectional material" (MD) i.e. "non-unidirectional material") are between - 90° and +90°, including the limiting values, with reference to a longitudinal axis of the semifinished product. Alternatively or additionally metal films and/or wires of aluminium or titanium alloys can be integrated into the web-form semifinished product in at least some regions. Instead of a web-form semifinished product the intermediate layers can also be formed with preformed, dry or preimpregnated fibre preforms that are intrinsically stable mechanically with, for example, a slightly trapezoidal cross-sectional geometry with flanges formed on one or both sides in at least some sections for purposes of forming the connecting feet. Moreover the combination of reinforcement layers made from unidirectional semifinished products and intermediate layers with multidirectional semifinished products prevents the risk of crack formation and slows down the crack propagation within the lightweight structure.

According to an example the object is achieved by means of a device, in that the at least one depression is a groove with two side walls attached on both sides to a base surface, wherein a groove edge zone for purposes of forming integral connecting feet for the skin is attached to at least one side wall in at least some sections.

By this means, for example, integrally formed stiffening ribs can be manufactured with connecting feet, i.e. T-feet, and the load-bearing capacity of the whole lightweight structure can be increased. Furthermore connecting feet can be formed on only one side of the stiffening ribs, which results in an L-shaped cross-sectional geometry. If the groove edge zones on a groove are missing on all sections, it is possible to produce stiffening ribs with an approximately rectangular cross-sectional geometry. The grooves have an approximately trapezoidal cross-sectional geometry, while the groove edge zones formed in mirror-images on the two sides of the grooves have an approximately triangular or wedge-shaped cross-sectional geometry. By a suitable variation of the cross-sectional geometries of the grooves and the groove edge zones a multiplicity of variously configured stiffening ribs can be produced by means of the device. The groove edge zones undergo a smooth, i.e. stepless, transition into a surface of the moulding tool.

In order to simplify the process of removal from the mould, the upper face of the moulding tool including the depressions can be provided in at least some regions with an anti-adhesive and, if required, an elastic coating. This coating can for example be formed with Teflon, with rubber mixtures or with polyurethane or another elastic rubber material.

A development of the device envisages that the side walls of the at least one groove and a surface of the moulding tool in each case subtend an angle α of between 90° and 60° and are designed so as to be inclined in opposite directions.

This enables, amongst other features, the production of integral stiffening ribs whose cross-sectional geometry can vary from the trapezoidal shape through to the rectangular shape with an angle α of 90°. In addition the at least slightly trapezoidal grooves ease the removal from the mould after completion of the lightweight structure and reduce notch stresses.

A further advantageous configuration of the device envisages that the groove edge zones with the surface of the moulding tool in each case subtend an angle β of more than 0° and less than 60°. By this means it is possible to manufacture stiffening ribs with integrally designed connecting feet, i.e. retaining feet (so-called "load coupling feet or T-feet") in a manner that is simple in terms of production technology.

In accordance with a further advantageous configuration of the device a first placement head is provided for the laying down of reinforcement layers and a second placement head is provided for the laying down of intermediate layers, wherein the placement heads and/or the moulding tool are designed such that they can be traversed.

For example the placement heads are designed such that they can be pivoted through an angle γ of between 0° and 180° relative to the longitudinal axis of the moulding tool, and/or can be traversed at least parallel to the longitudinal axis of the moulding tool. Furthermore the moulding tool can be designed such that it rotates relative to the placement heads and/or the placement heads for their part can rotate around the moulding tool. The placement heads, which to a large extent can be freely positioned in space and/or the moulding tool, which to a large extent can be freely positioned relative to the placement heads, enable, amongst other features, a laying down of the semifinished products on the moulding tool that is spatially exactly defined. The control of the respective traverse movements of the placement heads and/or the location control of the moulding tool in space, also the whole sequence control of the production process, is preferably undertaken in a fully automated manner by means of a processor unit, so as to achieve high process reliability with low production costs.

In a beneficial development of the device provision is made for the first placement head to have at least one layer store and the second placement head to have at least one further layer store with a downstream feed unit, a cutting unit and a supply unit.

By this means the reinforcement and intermediate layers can be stored in the first instance in such large quantities that a production operation can be achieved that is as free of interruptions as possible, and is fully automatic without manual interventions from the external environment. The feed unit of the second placement head allows a supply of semifinished. products under a defined. tensile stress that is independent of the layer stores, whereas the cutting unit serves to provide the tailoring of the intermediate layers, in particular at the node points. The supply' unit ensures in particular that the semifinished product is laid down free of creases after the cutting unit has passed through. The first placement head for the reinforcement fibres preferably also has a feed unit with a downstream cutting unit and supply unit. Furthermore optional pressure application units, in particular pressure application. rollers, or similar, can. be provided in the region of the supply units, in order to achieve an exactly defined pressure application force directed radially inwards in the laying down region of the reinforcement layers and the intermediate layers. The pressure application units can be components of the supply unit.

In addition the inventive object is achieved by means of a lightweight structure in accordance with the identifying features of Claim 6, wherein the stiffening ribs have integrally formed connecting feet for purposes of connection to a skin. By means of the additionally coupling of the stiffening ribs to the skin by means of the connecting feet the load-bearing capacity of the lightweight structure is significantly increased.

The lightweight structure provision is made for the stiffening ribs to be formed with a multiplicity of reinforcement layers and intermediate layers laid down one upon another.

By this means it is possible to produce the lightweight structure in accordance with the method in a highly automated manner, cost-effectively and in a reliable process, for example, on the inventive device. Furthermore by virtue of the alternating sequence of unidirectional reinforcement layers and multidirectional intermediate layers the stiffening ribs achieve, amongst other features, a high mechanical strength, high damage tolerance and advantageous impact characteristics.

In an advantageous configuration of the lightweight structure provision is made for the reinforcement layers to be formed with a strand-form semifinished product, which is formed with a fibre-reinforced plastic material with a fibre orientation of approximately 0°, and/or with a metallic material, and the intermediate layers are formed with a web-form semifinished product, which is formed with a fibre-reinforced plastic material with fibre orientations between -90° and +90°, and/or with a metallic material.

By this means ensues what is to a large extent a profile of the reinforcement fibres in the stiffening ribs that is oriented with the load field, which, in interaction with the skin that is acting as a "panel" in structural mechanics terms results in an integrally reinforced lightweight structure that can be subjected to high mechanical loads. The fibre orientations of the reinforcement fibres in the intermediate layers, which move between -90° and +90° including the limiting values, enable, amongst other features, a laying down procedure that in the ideal case is free of creases (so-called "drapability") .

The unidirectional reinforcement layers accommodate primarily high peripheral loads (tensile loads) acting on the lightweight structure, while the intermediate layers, amongst other features, accommodate shear, bending and transverse stresses from the skin and introduce these into the latter. By the embedding of metallic materials, in particular of lightweight metal alloys in wire, weave or film form, in at least some regions, the load-bearing capacity of the lightweight structure can be further optimised. In addition the multidirectional intermediate layers improve in particular the "impact behaviour", the "damage tolerance", and suppress any tendency towards crack formation and crack propagation.

In the figures:
- Fig. 1: shows a perspective view of a hollow cylindrical lightweight structure, by way of example, with a skin partially represented,
- Fig. 2: shows a schematic cross-sectional representation through a stiffening rib with skin and moulding tool,
- Fig. 3: shows a perspective view of a node point between two diagonal stiffening ribs and a peripheral stiffening rib,
- Fig. 4: shows in plan view a node point between two stiffening ribs crossing at right angles with reinforcement layers and intermediate layers
- Figs. 5 to 7: show various forms of embodiment of node points with reinforcement layers crossing one another,
- Fig. 8: shows a node point between two intermediate layers crossing one another,
- Fig. 9: shows a representation in side view of the principles of a possible form of embodiment of the device, and
- Fig. 10: shows a schematic representation of a plan view onto the device in accordance with Fig. 9.

In the figures the same design elements have the same reference numbers in each case.

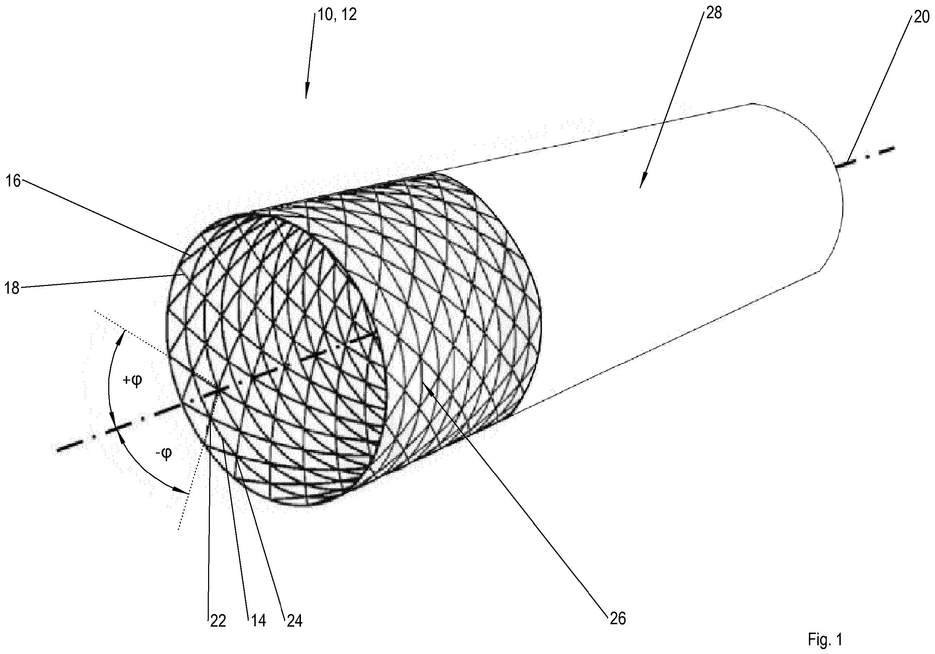

Fig. 1 shows a perspective view of a hollow cylindrical fuselage barrel as a possible form of embodiment of a lightweight structure.

Here the lightweight structure 10 is designed by way of example as an approximately hollow cylindrical fuselage barrel 12, i.e. as a fuselage section for an aircraft In a deviation from the latter the lightweight structure 10 - for example an upper shell for a lifting surface or a fuselage cell of an aircraft - can have a plane geometry, and/or a singly and/or a doubly curved geometry.

The lightweight structure 10 is formed with a multiplicity of stiffening ribs 14 running in the peripheral direction and a multiplicity of stiffening ribs 16, 18, running in a diagonal, i.e. inclined, direction; the latter can run at an angle of between 0° and ±90° with reference to a longitudinal axis 20 (axis of symmetry) of the lightweight structure. Here the angle can have values from, and including, ±90° to, and including, 0°. In each case at least two stiffening ribs intersect at a node point. Of the multiplicity of node points just two node points 22, 24 are provided with reference numbers. In their totality the stiffening ribs 14, 16, 18 form a grid structure 26, i.e. a ribbed structure, which on its outer face is overlaid with a monolithic skin 28 that is designed to be integral with the stiffening ribs 14, 16. Together with the skin 28 the stiffening ribs represent the integrally designed lightweight structure 10.

In a deviation from the regular reinforcement grid (so-called "isogrid") that is represented here just by way of example, the stiffening ribs 14, 16, 18 are preferably arranged such that an irregular grid structure ("anisogrid") ensues, wherein at the node points the stiffening ribs 14, 16, 18 in each case preferably cross at angles that differ from 90°. Here it is also possible for two, three or more stiffening ribs to cross one another at the node points. A cross-sectional geometry of the stiffening ribs 14 to 18 is approximately T-shaped.

The lightweight structure 10 is formed with a fibre-reinforced plastic (FRP) and/or with metallic materials, wherein the stiffening ribs are preferably arranged in alignment with the force field. This means that in the ideal case the reinforcement fibres in the FRP of the stiffening ribs essentially run in the direction of the local primary load direction. Accordingly the inventive lightweight structure 10 can exploit to a high degree the high load-bearing potential of modern FCPs, as a result of which a weight saving is achieved in comparison to the traditional aluminium form of construction with stringers, frames, angle profiles and an outer skin. Here the task of the conventional annular frame in the conventional aluminium form of construction is undertaken primarily by the stiffening ribs oriented in the peripheral direction, while the diagonal stiffening ribs in their totality undertake the function of the traditional stringers. The skin 28, acting as a "panel" in structural mechanics terms, undertakes the function of the skin in the traditional aluminium form of construction in an essentially unaltered manner.

The lightweight structure 10 can have a geometry deviating from the hollow cylindrical shape that has been quoted just by way of example, and can for example be designed as a truncated cone, or can have an elliptical or an oval cross-sectional geometry, or a combination of at least two of the forms and cross-sectional geometries cited.

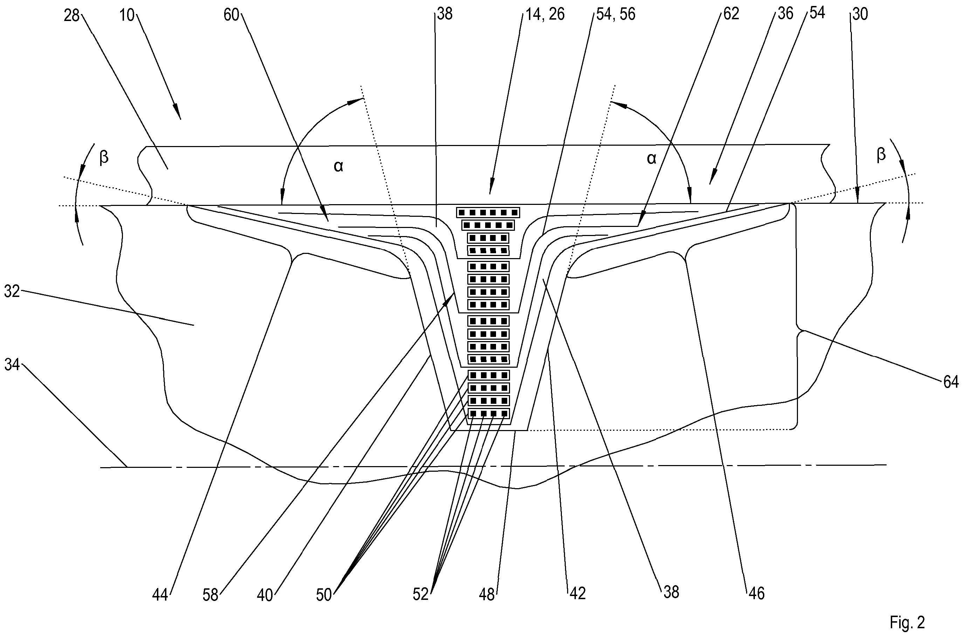

Fig. 2 shows a schematic cross-sectional representation through the lightweight structure 10 in the region of the peripheral stiffening rib 14, together with a moulding tool used for its manufacture.

In a surface 30 of a moulding tool 32, here designed just by way of example as a hollow cylindrical rotary moulding tool, a multiplicity of peripheral depressions 36, running diagonally with reference to a longitudinal axis 34 of the moulding tool, are introduced for purposes of creating the grid structure 26 that is serving to provide reinforcement. The longitudinal axis 34 of the moulding tool runs parallel to the longitudinal axis of the lightweight structure 10 (cf. in particular Fig. 1). The spatial arrangement of the depressions 36 within the surface 30 of the moulding tool 32 corresponds to that of the grid structure 26 that is to be depicted. Fig. 2 shows a depression 36 embodied as a groove 38 with adjacent groove edge zones 44, 46 on two side walls 40, 42 on either side, in each case with an approximately triangular, i.e. wedge-shaped, cross-sectional geometry. The side walls 40, 42 attached to the base surface 48 of the approximately trapezoidal groove 38 are in each case designed inclined at an angle α in opposite directions with reference to the surface 30. The angle α can assume any values between 0° and 90°, wherein the limiting values are excluded. The groove edge zones 44. 46 in each case subtend an angle β with the surface 30 of the moulding tool 32. The angle β can assume any values between 0° and 90°, wherein the limiting values are again excluded. In the example of embodiment shown in Fig. 2 the groove edge zones 44, 46 undergo a smooth transition into the surface 30 of the moulding tool 32. In a variation from this configuration at least one step can also be provided in the transition to the skin 28.

In the groove 38 are arranged a multiplicity of reinforcement layers 50 - of which just the four lowest layers are provided with a reference number - , which for their part are formed with a multiplicity of unidirectional semifinished products 52, here in strand-form, i.e. strip-form. Here between each set of four reinforcement layers 50 an intermediate layer 54 is inlaid by way of example; this is formed with a web-form multidirectional semifinished product 56. In comparison to the reinforcement layers 50 the intermediate layers 54 have a significantly greater width. The web-form intermediate layers 54 preferably have a width that corresponds to a multiple of a width of the strand-form reinforcement layers 50, in order, amongst other features, to optimise the mechanical attachment to the skin 28.

The multidirectional intermediate layers 54 preferably increase the insensitivity of the lightweight structure to foreign body impacts (so-called "impact resistance"), act against crack formation and crack propagation, increase the damage tolerance (so-called "damage tolerance") and simplify repairs of the lightweight structure in general.

The depression 36 is covered with a first intermediate layer 54 over its full surface, whereas the uppermost reinforcement layer 50 is not covered with an intermediate layer 54 and is attached directly to the skin 28. The reinforcement layers 50 and the intermediate layers 54 fill the depression 36 at least partially. A non-designated width of the intermediate layers 54 is dimensioned such that at least the intermediate layer 54 nearest to the moulding tool covers the depression 36 completely. Since in an ongoing laying down or winding process the groove 38 fills up to an increasing extent with reinforcement layers 50 and intermediate layers 54, with a constant width of the intermediate layers 54 in the region of the groove edge zones 44, 46 a finely stepped, wedge-shaped transition to the skin 28 ensues.

A sequence of reinforcement layers 50 and intermediate layers 54 that deviates from the example of a laminate structure shown is also possible. The reinforcement layers 50 and intermediate layers 54 laid down alternately by groups one upon another in the region of the groove 38 form a web 58 of the stiffening rib 14 essentially vertical to the skin 28 with a slightly trapezoidal cross-sectional geometry, which corresponds with the cross-sectional geometry of the groove 38 within the moulding tool 32. Attached to the web 58 in the region of the groove edge zones 44, 46, with the intermediate layers 54 laid down on the former, are the inventively designed connecting feet 60, 62 (so-called "T-feet"). Thus in the example of embodiment shown in Fig. 2 an approximately T-shaped cross-sectional geometry ensues for the stiffening rib 14. By means of the connecting feet 60, 62, designed on both sides integrally with the web 58 and the skin 28 with an approximately triangular, i.e. wedge-shaped cross-sectional geometry, the mechanical attachment of the stiffening rib 14 to the skin 28 is in particular optimised.

During the laying down or winding process the reinforcement layers 50 are preferably laid down on the surface 30 of the moulding tool 32 under a defined tensile stress so as to generate in particular a pressure application force directed radially inwards. Here in order to prevent the intermediate layers 54 from slipping or sliding into the groove 38, it can be necessary to fix the intermediate layers 54 in their location in the region of the groove edge zones 44, 46 with the aid of a suitable adhesive, for example a thermoplastic that can be fused at a low temperature and/or a spray adhesive, during and after the winding process. In addition a mechanical fixing of location can be undertaken, e.g. by clamping the intermediate layers 54 together. Furthermore the intermediate layers 54 themselves can be formed with a prefixed preform, i.e. one that already has sufficient inherent mechanical stability. A depth 64 of the groove 38 is dimensioned such that a sufficient, non-designated height of the web 58 of the stiffening rib 14 ensues for the mechanical load or stress that is to be accommodated. The depth 64 of the groove 38 can vary by section in order to produce stiffening ribs of different heights. Correspondingly a width of the groove 38 and/or of the groove edge zones 44, 46 can also be altered by section. As a consequence of the slightly trapezoidal cross-sectional geometry of the groove 38, after all reinforcement and intermediate layers 50, 54 have been laid down, the skin 28 has been manufactured and the whole laminate structure if necessary has been infiltrated with a matrix material and cured, the stiffening rib can be more easily removed from the moulding tool 32.

In principle the semifinished products 52, 56 can take the form of prepreg material, or of dry reinforcement fibre arrangements apart from optional ancillary, binding or adhesive agents, and/or of metallic materials, in particular metal films, networks and/or wires. The skin 28 is formed by the winding or laying down of reinforcement layers 50 and/or intermediate layers 54 and/or other reinforcement fibre arrangements onto the moulding tool 32. Alternatively or additionally both the reinforcement layers 50 and also the intermediate layers 54 and the skin 28 can have metallic materials.

In one possible form of embodiment the reinforcement layers 50 are formed with a strand-form or strip-form semifinished product, whose fibre orientation essentially lies at approximately 0°, while the intermediate layers 54 can be formed with a web-form semifinished product 56, which has a multiplicity of various fibre orientations between +90° and -90°. The semifinished products 52, 56 can be formed with any FRPs and/or with metallic materials.

For example, the strand-form semifinished product 52 can be constructed with unidirectional fibre or filament bundles (so-called "rovings") or with narrow essentially unidirectional woven or matted tapes of a prepreg material, while for purposes of covering the depression 36 the web-form multidirectional semifinished product 56 can be constructed with a significantly wider, web-form weave, mat or another preimpregnated arrangement of reinforcement fibres. Carbon fibres, glass fibres, Kevlar fibres, Aramide fibres, in particular come into consideration as the reinforcement fibres; these are impregnated with a thermosetting plastic or a thermoplastic material as the matrix material. As matrix formers thermosetting plastics, in particular epoxy resins, or high performance thermoplastics come into consideration, by virtue of the high mechanical requirements on the lightweight structure 10. As metallic materials lightweight metal alloys, in particular aluminium alloys and/or titanium alloys, can in particular be used.

Since the stiffening ribs 14 in each case preferably follow the local flow field within the lightweight structure 10, the unidirectional reinforcement layers 50 in the peripheral stiffening ribs of the later fuselage cell structure in particular bring about a significant gain in strength with respect to tensile stresses, i.e. tensile loads, acting in the radial direction. The intermediate layers 54, which are constructed with the web-form, multidirectional semifinished product 56 and preferably with a multiplicity of fibre orientations differing from 0° on the other hand counter in particular the transverse stresses, bending stresses and shear stresses within the lightweight structure 10. In addition the said fibre orientation improves the drapability, as a result of which the risk of crease formation when placing the intermediate layers 54 in the depressions 36 of the moulding tool 32 is reduced.

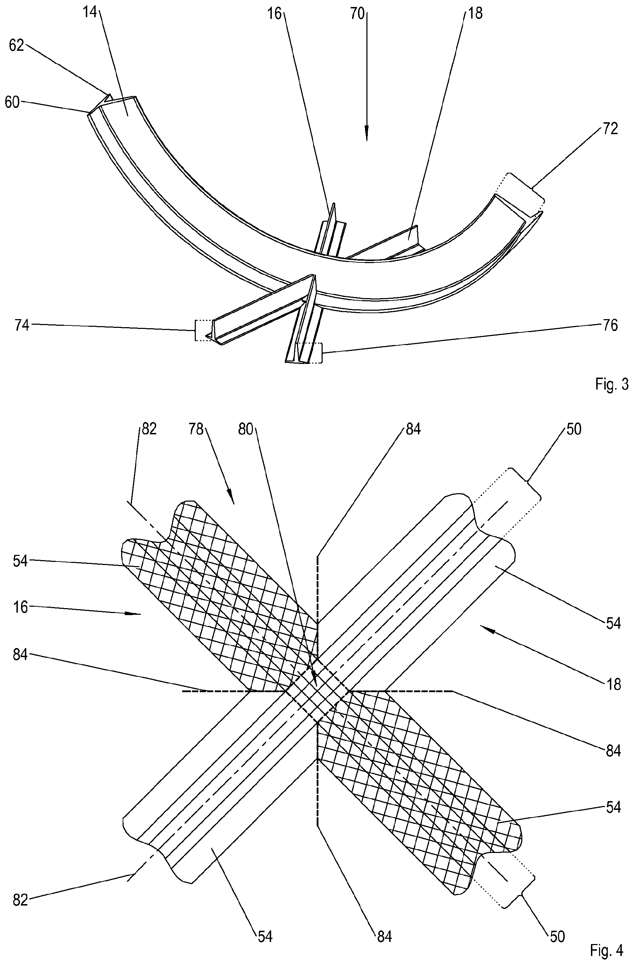

Fig. 3 shows a perspective view of a node point with three stiffening ribs crossing one another. In the interests of improving the clarity of the figure the skin of the lightweight structure is not represented.

Between the two diagonal stiffening ribs 16, 18 and the peripheral stiffening rib 14 there exists a node point 70, wherein the stiffening ribs 14 to 18 cross one another at angles differing from 90°. Furthermore it can be seen that the stiffening ribs 14 to 18 in each case have an approximately T-shaped cross-sectional geometry with a vertical web, and with connecting feet or connecting flanges, attached to the web on both sides, for the skin of the lightweight structure. The peripheral stiffening rib 14 can undertake the function of the frame in the traditional fuselage cell form of construction, while the diagonal stiffening ribs 16, 18 primarily have the task of accommodating transverse, bending, and shear stresses, and/or of introducing them into the skin of the lightweight structure. A height 72 of the peripheral stiffening rib 14, including a material thickness of the connecting feet 60, 62 is here preferably dimensioned to be greater than the heights 74, 76 of the diagonal stiffening ribs 16, 18, wherein the material thickness of the related connecting feet are included.

Fig. 4 illustrates a schematic plan view onto a possible form of embodiment of a node point between two stiffening ribs crossing one another orthogonal.

Between the two stiffening ribs 16, 18, constructed in each case with reinforcement and intermediate layers 50, 54, and here crossing one another at right angles by way of example, there exists a node point 78. Here the reinforcement layers 50 are running above the intermediate layers 54. The unidirectional reinforcement layers 50, in each case continuous and uncut, lie one upon another at the node point 78 in a square overlap region 80, thus creating a layer-doubling. The intermediate layers 54 are in each case completely severed, so that no further layer-doubling occurs in the overlap region 80. To this end a trapezoidal section 84, running essentially transverse to its longitudinal axis 82 is introduced in each case into four non-designated end sections of the intermediate layers 54 in the region of the node point 78, i.e. as a result the intermediate layers 54 abut against the "mitre" on all sides of the square overlap region 80.

Alternatively it is also possible to allow the intermediate layers 54 to remain unsevered in the region of the square overlap region 80. In this case the two, now continuous, intermediate layers 54 have in the region of the node point 78 in each case two non-designated trapezoidal incisions, arranged opposite one another on both sides, and in each case running essentially parallel to the longitudinal axes 82. However, in this form of embodiment the result is a layer-doubling of the intermediate layers 54 in the overlap region 80.

At this point a further comment should be made that at the node point 78 more than two stiffening ribs 16, 18 can also cross one another in the appropriate manner at an angle deviating from 90°.

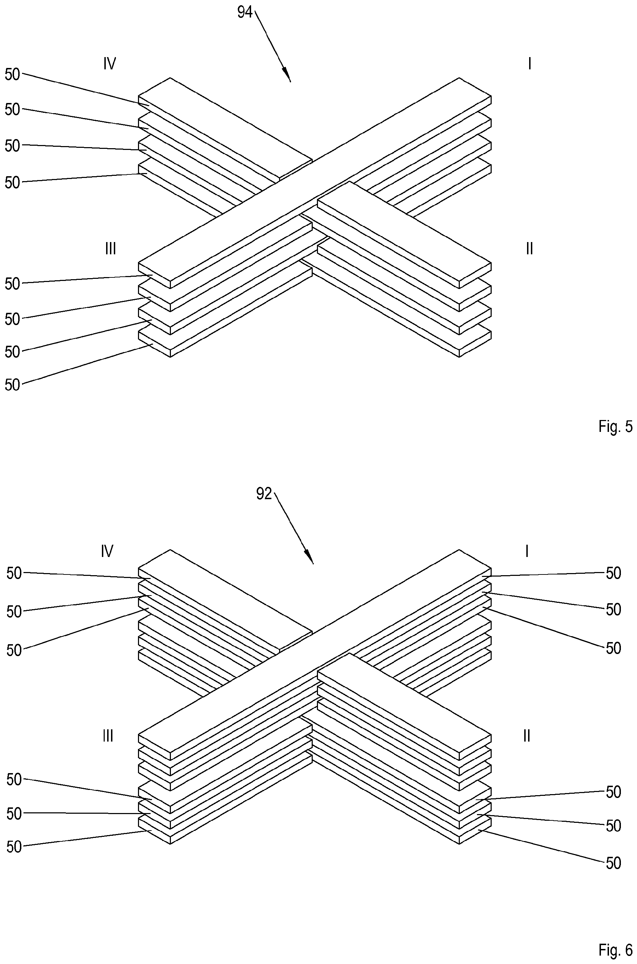

Figs. 5 to 7 show further possible forms of embodiment of node points between reinforcement layers. In the interests of improving the clarity of Figs 5 to 7 only the reinforcement layers are represented crossing one another.

In accordance with Fig. 5 a node point 90 is formed with a multiplicity of strand-form or strip-form reinforcement layers 50, here crossing one another at right angles by way of example. The uppermost reinforcement layer 50 arriving at the node point 90 from the direction IV is severed ahead of the node point 90 and behind the node point 90 is restored, while the uppermost reinforcement layer 50 arriving at the crossing point from the direction III is designed so as to be continuous. In the layer plane located directly underneath, however, the reinforcement layer 50 arriving from the direction IV is designed so as to be continuous, while the reinforcement layer 50 abutting onto the node point from the direction III is severed in the region of the node point 90 and is subsequently restored. A length of each section removed here approximately corresponds to a non-designated width of the reinforcement layers 50. In the layer planes located underneath the procedure is correspondingly the same in each case. By this means a doubling of the reinforcement layers 50 in the event of two reinforcement layers 50 crossing one another in the region of the node point 90 is prevented, as is an undesirable thickening of the laminate structure at the node point 90 that may accompany the doubling. By virtue of the alternating sequence of severed and continuous reinforcement layers 50 by layer, i.e. by plane, a very intensive intermeshing ensues and thus an intimate composite of the reinforcement layers 50 with one another.

In contrast to the node point 90 in accordance with Fig. 5 in the case of the node point 92 in Fig. 6 the three uppermost reinforcement layers 50 arriving at the node 92 from the direction IV ahead of the node point 92 are in each case severed and then restored after they have passed through the node point, while the three uppermost reinforcement layers 50 arriving at the node point 92 from the direction III pass through the node point unsevered. The procedure is exactly reversed for the three lower reinforcement layers 50 arriving at the node point 92 from the direction IV, and for the three lower reinforcement layers 50 arriving at the node point 92 from the direction III. In each direction III or IV three continuous and three discontinuous reinforcement layers 50 are always located one upon another in an alternating manner. Here the reinforcement layers 50 are crossed one upon another until a desired material thickness is achieved at the node point 92. In contrast to the form of embodiment in Fig. 5 here the sequence of continuous and severed intermediate layers from the directions III and IV changes over by group, wherein the group can comprise two, three or a higher number of reinforcement layers 50.

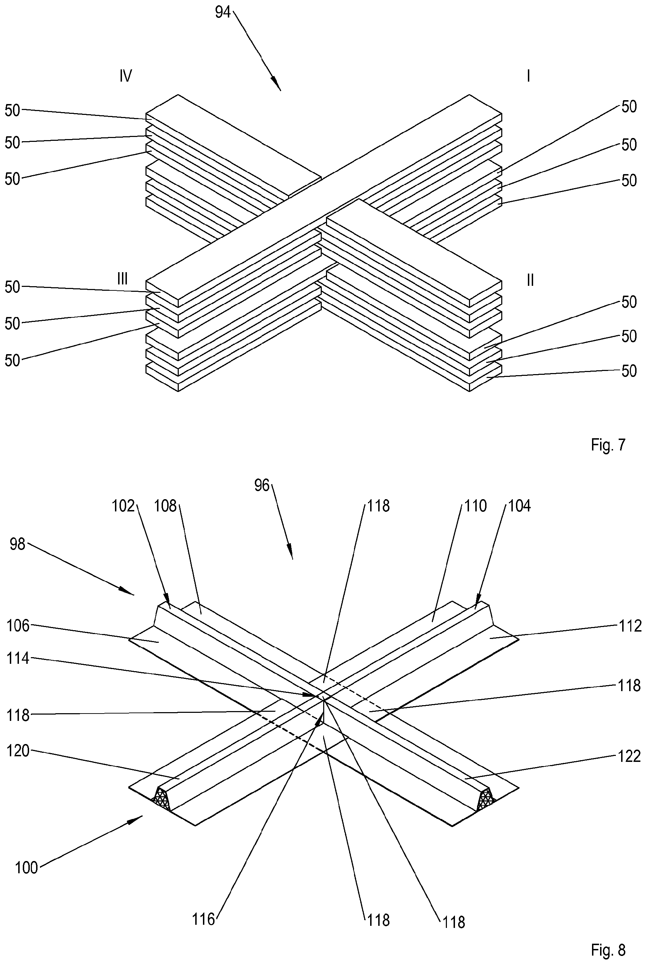

In the case of the node point 94 in Fig. 7 one uppermost reinforcement layer 50 coming from the direction IV is severed ahead of the node point 94 and is subsequently restored. The reinforcement layer 50 running towards the node point 94 from the direction III is located in the same layer plane, but passes through the node point 94 unsevered. Two reinforcement layers 50 underneath the uppermost reinforcement layer coming from the direction IV again pass through the node point 94 unsevered, while two reinforcement layers 50 underneath the uppermost reinforcement layer coming from the direction III are severed ahead of the node point and are subsequently restored. In the case of the three further, lower reinforcement layers 50 the sequence of severed and continuous reinforcement layers 50 is configured in a reversed order.

In all three forms of embodiment of the node points 90 to 94 a thickening in terms of a layer-doubling as a consequence of reinforcement layers 50 crossing one another is avoided. In addition to the three crossing options for reinforcement layers 50, shown in Figs. 5 to 7 just by way of example, with the creation of the three node points 90 to 94, further sequences of severed and continuous reinforcement layers 50 that are not represented can be provided for the formation of node points. In addition any number of reinforcement layers 50 can cross at such node points at any angle, in particular at angles deviating from 90°.

Fig. 8 illustrates in a highly simplified perspective representation an alternative form of embodiment of a node point between two intermediate layers, here crossing one another orthogonally just by way of example, each with a trapezoidal cross-sectional geometry. In the interests of improving the clarity of the figure the reinforcement layers that are also crossing one another are not featured here.

At a node point 96 two web-form multidirectional intermediate layers 98, 100 are crossing one another. Each intermediate layer 98, 100 features a web 102, 104 with an approximately trapezoidal cross-sectional geometry, to the non-designated flanks of which in each case horizontal connecting feet 106 to 112 are attached on both sides. In each case the two non-designated flanks of a web 102, 104 are designed so as to be slightly inclined in opposite directions. The horizontal connecting feet 106 to 112, i.e. the flanges, are designed to be pointing away from one another in each case on either side of the web 102, 104. The intermediate layer 98 passes through the node point 96 unsevered, while two recesses 114, 116 are cut into the flanks and the connecting feet 110, 112 of the intermediate layer 100 in each case so as to allow the intermediate layer 98 to pass through. In the plane, uncreased state of the intermediate layer 100 the recesses 114, 116 have the approximate shape of a trapezium onto whose wider side a rectangle of equal width is attached. In square overlap regions 118 the result in each case is a layer-doubling between the connecting feet 106 to 112 and the upper faces 120, 122 of the webs 102, 104 of the intermediate layers 98, 100. In order to avoid a layer-doubling in the region of the connecting feet 106 to 112, the connecting feet concerned 106, 108 or 110, 112, in each case of one of the two intermediate layers 98, 100, can have recesses, not represented, in the region of the square overlap regions 118, the form of which recesses corresponds with that of the overlap regions 118. A non-designated width of the plane, uncreased intermediate layers 98, 100 is dimensioned such that the depressions 36 in the moulding tool are preferably covered completely, so as to form the connecting feet.

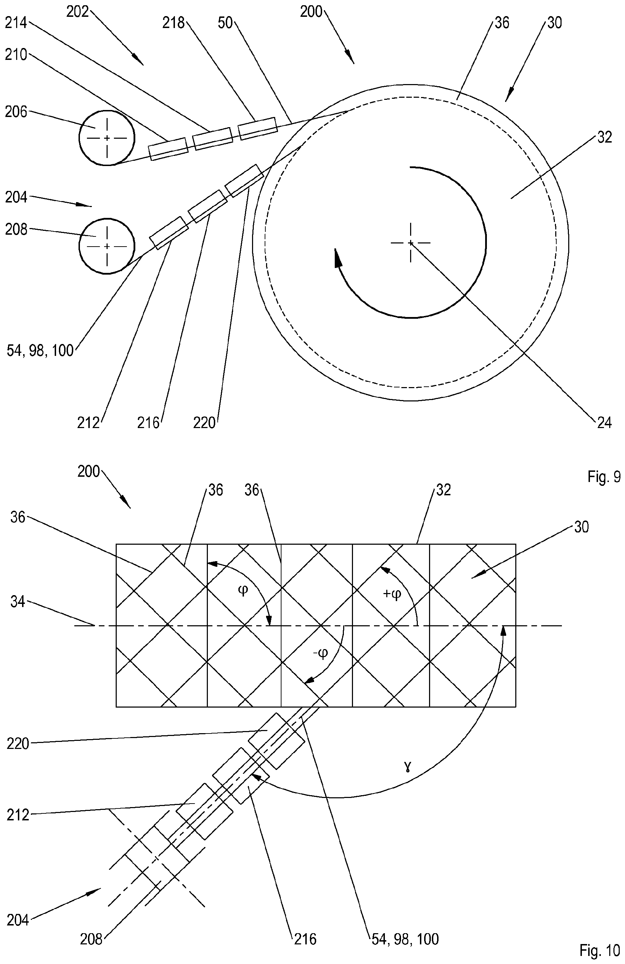

Figs. 9 and 10, to which reference is made at the same time as the description proceeds further, show a device for the production of the lightweight structure (cf. in particular Fig. 1) in a simplified side view and plan view respectively.

A device 200 for the production of the inventive lightweight structure features a moulding tool 32, here configured, just by way of example, as a hollow cylinder, which rotates about a longitudinal axis 34 of the moulding tool. In a deviation from the latter the moulding tool 32 can also have a plane surface 30, and/or a singly, and/or a doubly curved surface 30, in order, for example, to allow production of spherically curved shell parts.

A multiplicity of diagonal and peripheral depressions 36 are introduced into the surface 30 of the moulding tool 32, into which depressions the reinforcement layers 50 and the intermediate layers 54, 98, 100 are laid down. For purposes of integral design of the stiffening ribs of the lightweight structure the depressions 36 are preferably introduced at angles of between 0° and ±90° relative to the longitudinal axis 34 of the moulding tool, wherein the limiting values are included. At least two depressions cross one another at node points that are here non-designated, in each case at an angle of 90° or a smaller angle, and preferably form an irregular grid structure. The reinforcement and intermediate layers 50, 54, 98, 100 are successively laid down by layers one upon another into the grid structure formed by means of the depressions 36, so as to create the stiffening ribs of the lightweight structure. The depressions 36 are preferably designed as grooves with groove edge zones (cf. in particular Fig. 2).

The device 200 features, for example, two placement heads 202, 204, each of which here has a layer store 206, 208, a feed unit 210, 212, a cutting unit 214, 216, and a supply unit 218, 220. The first placement head 202 serves to lay down the reinforcement layers 50, whereas the second placement head 204 in accordance with the disclosure is designated for the simultaneous laying down of the intermediate layers 54, 98, 100. The drum-shaped layer stores 206, 208 serve to provide storage for a sufficient quantity of reinforcement and intermediate layers, in particular so as to ensure a fully automatic production process for the lightweight structure that is free of interruptions and can be reliably reproduced. With regard to the reinforcement and intermediate layers 50, 54, 98, 100 formed with strand-form and web-form semifinished products made from FCPs and/or metallic materials, reference is made at this point to the statements made earlier above.

The feed units 210, 212 ensure, amongst other features, a continuous delivery of the reinforcement and intermediate layers 50, 54, 98, 100 under a defined tensile stress. In particular the reinforcement layers 50 are laid down with an increased tensile stress into the depressions 36 of the moulding tool 32 designed as grooves 38, so as to be able to compact the layered structure with a force directed radially inwards in a manner that is as free of creases and cavities as possible. The reinforcement and intermediate layers 50, 54, 98, 100 can be severed with the aid of the cutting units 214, 216. Here in the region of the cutting stations running preferably transverse to the longitudinal axis of the intermediate layers 54, 98, 100 it is possible to implement cutting contours of any kind. Furthermore a width of the intermediate layers 54, 98, 100 in at least some sections can optionally be varied by means of longitudinal cuts with any kind of contour introduced on one or both sides. In addition recesses with, for example, a trapezoidal or another contour can be introduced on one or both sides into the intermediate layers 54, 98, 100, wherein no complete severance of the intermediate layers 54, 98, 100 takes place.

The actual delivery of the reinforcement and intermediate layers 50, 54, 98, 100 into the channel-form depressions 36 is undertaken by means of the supply units 218, 220, wherein at the same time an automated restoration of severed layers on already wound-up layers is possible by means of the supply units 218, 220. The two cutting units 214, 216 thus enable in interaction with the supply units 218, 220 a fully automatic manufacture of crossing points (cf. in particular Figs. 3 to 8) between the reinforcement layers 50 and the intermediate layers 54, 98, 100.

In a form of embodiment of the device 200 not explicitly represented in the figures, the first placement head 202 - in particular in the interests of simplifying the design - can be equipped only with the layer store 206 if the feed unit 210, cutting unit 214 and supply unit 218 are omitted. In Fig. 10 only the second placement head 204, arranged underneath the first placement head 202, for the intermediate layers 54, 98, 100 is included, in the interests of greater clarity of the figure.

It is, for example, possible for both placement heads 202, 204 to pivot through an angle γ between 0° and 180° with reference to the longitudinal axis 34 of the moulding tool, so that the placement heads 202, 204 in conjunction with the rotational movement of the moulding tool 32 can travel to any point on the surface 30 of the moulding tool 32 and there can lay down the reinforcement and intermediate layers 50, 54, 98, 100 into the depressions 36. Vice versa, the moulding tool 32 can be designed to be stationary, whereas the placement heads 202, 204 are embodied such that they can be freely positioned in space.

If required the placement heads 202, 204 can be designed such that they can be traversed at least parallel to the longitudinal axis 34 and, if required, also peripherally, in order to increase the degrees of freedom of the placement heads 202, 204 and the laying down procedural options. In the case of a plane moulding tool 32, and/or a moulding tool 32 only singly and/or doubly curved over a small extent, the placement heads 202, 204 can be arranged at a portal such that the moulding tool 32 can be traversed parallel to the longitudinal axis 34 of the moulding tool and at right angles to the latter, so as to be able to travel to any point of the surface 30 of the moulding tool 32.

The movement sequences of the moulding tool 32 and the placement heads 202, 204 including the control of the functional subgroups therein contained, are controlled by a computer-aided control and/or regulation unit, not represented, so as to ensure a fully automatic and continuous process of manufacture of the lightweight structure by means of the device 200. Alternatively the device 200 can have just one placement head, wherein the said placement head is then designed for the laying down of both reinforcement layers 50 and also intermediate layers 54, 98, 100.

If, in the course of the laying down process, a sufficient quantity of reinforcement and intermediate layers 50, 54, 98, 100 has been laid down in the depressions 36 by means of the placement heads 202, 204, and the depressions 36 are at least partially filled with reinforcement and intermediate layers 50, 54, 98, 100, the skin of the lightweight structure is manufactured. The layers used to form the skin can take the form, for example, of the reinforcement and intermediate layers 50, 54, 98, 100. Alternatively any fibre-reinforced plastics and/or metallic materials can be deployed.

Depending upon the FRP deployed the total structure is then, for example, cured in an autoclave with the application of pressure and/or temperature, or in an upstream step of the method the total structure is infiltrated, i.e. impregnated, with a curable thermosetting plastic material and then cured. For the case in which high performance thermoplastics are deployed as the matrix former in at least some regions, the device 200 features a heating unit, not represented, for purposes of plasticising the thermoplastics. The solidification of regions of the lightweight structures that are formed with thermoplastic FCPs is undertaken by cooling to room temperature.

Finally the sequence of the inventive method for the creation of the lightweight structure must be described.

In step a) of the method intermediate layers 54, 98, 100 and reinforcement layers 50 are laid down in at least some regions into the depressions 36 of the moulding tool 32, so as to manufacture the preferably irregular grid structure made from stiffening ribs. In accordance with step b) of the method, step a) is repeated until the depressions 36 are filled with reinforcement and intermediate layers 50, 54, 98, 100, to the point that a prescribed height has been achieved for all stiffening ribs. Here in each case at least one intermediate layer and at least one reinforcement layer are laid down in an alternating manner. In step c) of the method layers made from an FRP and/or metallic materials are laid down on, or wound onto, the moulding tool 32 so as to form the integral skin of the lightweight structure. Here in the interests of simplicity, for example, the reinforcement layers 50 and/or the intermediate layers 54, 98, 100 that are stored in the placement heads 202, 204 of the device 200 can be deployed. In the final step d) of the method the curing and/or resolidification of the intermediate layers 50 and the reinforcement layers 54, 98, 100 is undertaken.

If the unidirectional reinforcement layers 50 and the multidirectional intermediate layers 54, 98, 100 are formed with a semifinished product made from a thermosetting FRP and/or with metallic materials, the curing of the layered structure wound onto the moulding tool 32 can take place in a manner of known art, for example in an autoclave. If, on the other hand, the reinforcement and intermediate layers 50, 54, 98, 100 are formed at least partially with a thermoplastic FRP, a cooling of the temporarily plasticised reinforcement and intermediate layers 50, 54, 98, 100 is in general sufficient for the completion of the lightweight structure.

If, on the other hand, the reinforcement and intermediate layers 50, 54, 98, 100 are formed with a semifinished product made from a dry FRP that has not yet been preimpregnated with a plastic material, i.e. not with a so-called "prepreg material" and/or with metallic materials, then before the curing or resolidification by means of cooling, an infiltration, i.e. impregnation, of the layered structure must be undertaken with a suitable plastic material, in particular with a thermosetting plastic and/or with a thermoplastic. In addition it is possible to impregnate dry reinforcement fibres, or dry reinforcement fibre arrangements, with a plastic material (polymer) before the laying down process. This can, for example, be undertaken in that the reinforcement fibres, or the reinforcement fibre arrangements, can be fed through a resin bath or similar.

Alternatively of additionally elastomers, such as, for example, rubber, rubber mixtures, or polyurethanes, can also be deployed as matrix formers for the semifinished products of the reinforcement layers and the intermediate layers 50, 54, 98, 100.

### List of reference symbols

- 10.: Lightweight structure
- 12.: Fuselage barrel
- 14.: Stiffening rib (periphery)
- 16.: Stiffening rib (diagonal)
- 18.: Stiffening rib (diagonal)
- 20.: Longitudinal axis
- 22.: Node point
- 24.: Node point
- 26.: Grid structure
- 28.: Skin
- 30.: Surface (moulding tool)
- 32.: Moulding tool
- 34.: Moulding tool longitudinal axis
- 36.: Depression
- 38.: Groove
- 40.: Side wall (groove)
- 42.: Side wall (groove)
- 44.: Groove edge zone
- 46.: Groove edge zone
- 48.: Base surface (groove)
- 50.: Reinforcement layer
- 52.: Strand-form semifinished product
- 54.: Intermediate layer
- 56.: Web-form semifinished product
- 58.: Web (stiffening rib)
- 60.: Connecting foot
- 62.: Connecting foot
- 64.: Depth (groove)
- 70.: Node point
- 72.: Height (stiffening rib)
- 74.: Height (stiffening rib)
- 76.: Height (stiffening rib)
- 78.: Node point
- 80.: Overlap region
- 82.: Longitudinal axis (intermediate layer)
- 84.: Cut (trapezoidal)
- 90.: Node point
- 92.: Node point
- 94.: Node point
- 96.: Node point
- 98.: Intermediate layer
- 100.: Intermediate layer
- 102.: Web (intermediate layer)
- 104.: Web (intermediate layer)
- 106.: Connecting foot
- 108.: Connecting foot
- 110.: Connecting foot
- 112.: Connecting foot
- 114.: Recess
- 116.: Recess
- 118.: Overlap region
- 120.: Upper face
- 122.: Upper face
- 200.: Device
- 202.: Placement head
- 204.: Placement head
- 206.: Layer store
- 208.: Layer store
- 210.: Feed unit
- 212.: Feed unit
- 214.: Cutting unit
- 216.: Cutting unit
- 218.: Supply unit
- 220.: Supply unit

## Claims

1. A method for the manufacture of an integrally reinforced lightweight structure (10) with a fibre-reinforced plastic, in particular of a fuselage barrel or a shell component of an aircraft, by means of a moulding tool (32), wherein the lightweight structure (10) has a multiplicity of stiffening ribs (14-18) crossing one another at node points (22, 24, 70, 78, 90-96), wherein a skin (28) is attached to the stiffening ribs (14-18) and the moulding tool (32) has a multiplicity of channel-type depressions (36) for purposes of creating the stiffening ribs (14-18), comprising the following steps:
a) laying down in at least some regions of at least one intermediate layer (54, 98, 100) and at least one reinforcement layer (50) into the depressions (36), wherein the at least one reinforcement layer (50) is severed before at least one node point (22, 24, 70, 78, 90 - 96) and behind the node point (22, 24, 70, 78, 90 - 96) in the region of the groove (38) is restored, or that at least one recess (114, 116) is introduced into the at least one intermediate layer (54, 98, 100) in the region of the at least one node point (22, 24, 70, 78, 90-96) in at least some regions.
b) repetition of step a) until the depressions (36) are at least partially filled. with intermediate layers (54, 98, 100) and reinforcement layers (50) for purposes of forming the stiffening ribs (14-18) with integral connecting feet (60, 62, 106-112),
c) population of the moulding tool (32), in particular with intermediate layers (54, 98, 100) and/or reinforcement layers (50), for purposes of manufacturing the skin (28), and
d) curing and/or solidification of the intermediate layers (54, 98, 100) and reinforcement layers (50), wherein the at least one depression (36) is formed with a groove (38) with two side walls (40, 42) and a groove edge zone (44, 46) is attached in at least some sections to at least one side wall (40, 42), wherein the grooves have an approximately trapezoidal cross-sectional geometry while the groove edge zones formed in mirror-images on the two sides of the grooves have an approximately triangular or wedge-shaped cross-sectional geometry and groove edge zones undergo a smooth, i.e. stepless, transition into a surface of the moulding tool, wherein the reinforcement layers (50) are laid down in the groove (38), and the intermediate layers (54, 98, 100) are laid down in the groove (38) and in the at least one adjacent groove edge zone (44, 46), wherein the stiffening ribs (14-18) are formed with a multiplicitv of reinforcement layers (50) and intermediate layers (54, 98, 100) laid down one upon another.

2. The method in accordance with Claim 1, **characterised in that** the reinforcement layers (50) are laid down in the grooves (38) under mechanical stress, and/or the intermediate layers (54, 98, 100) are fixed in the region of the groove edge zones (44, 46).

3. The method in accordance with Claim 1 or 2, **characterised in that** the at least one reinforcement layer (50) passes through the at least one node point (22, 24, 70, 78, 90-96) unsevered.

4. The method in accordance with one of the Claims 1 to 3,
**characterised in that** the reinforcement layers (50) are formed with a strand-form semifinished product, which is formed with a fibre-reinforced plastic material and/or with a metallic material.

5. The method in accordance with one of the Claims 1 to 4,
**characterised in that** the intermediate layers (54, 98, 100) are formed with a web-form semifinished product, which is formed with a fibre-reinforced plastic material and/or with a metallic material, and which has a width that allows a covering of the grooves (38) and the groove edge zones (44, 46) in at least some regions.

6. A lightweight structure (10), wherein the lightweight structure (10) is manufactured according to the method of claim 1, in particular a fuselage barrel or a shell component of an aircraft, which is formed with a fibre-reinforced plastic by means of a moulding tool (32), wherein the integrally reinforced lightweight structure (10) has a multiplicity of stiffening ribs (14-18) crossing one another at node points (22, 24, 70, 78, 90-96) **characterised in that** the stiffening ribs (14-18) have integrally designed connecting feet (60, 62, 106-112) for purposes of attachment to a skin (28),
whereby the stiffening ribs (14-18) are formed with a multiplicity of reinforcement layers (50) and intermediate layers (54, 98, 100) laid down one upon another, wherein the at least one reinforcement layer (50) is severed before at least one node point (22, 24, 70, 78, 90 - 96) and behind the node point (22, 24, 70, 78, 90 - 96) in the region of the groove (38) is restored, or that
at least one recess (114, 116) is introduced into the at least one intermediate layer (54, 98, 100) in the region of the at least one node point (22, 24, 70, 78, 90-96) in at least some regions.

7. The lightweight structure (10) in accordance with Claim 6,
**characterised in that**, the reinforcement layers (50) are formed with a strand-form semifinished product (52), which is formed with a fibre- reinforced plastic material with a fibre orientation of approximately 0° with reference to the longitudinal axis of the strand-form semifinished product (52) and/or with a metallic material, and the intermediate layers (54, 98, 100) are formed with a web-form semifinished product (56), which is formed with a fibre-reinforced plastic material with fibre orientations of between -90° and +90° with reference to the longitudinal axis of the semifinished product (52), and/or with a metallic material.

## Patentansprüche

1. Verfahren zur Herstellung einer integral verstärkten Leichtbaustruktur (10) mit einem faserverstärkten Kunststoff, insbesondere einer Rumpftonnen- oder einer Schalenkomponente eines Flugzeugs, mittels eines Formungswerkzeugs (32), wobei die Leichtbaustruktur (10) eine Vielzahl von Versteifungsrippen (14-18) aufweist, die einander an Knotenpunkten (22, 24, 70, 78, 90-96) kreuzen, wobei an den Versteifungsrippen (14-18) eine Haut (28) befestigt ist und das Formungswerkzeug (32) eine Vielzahl von kanalartigen Vertiefungen (36) aufweist, um die Versteifungsrippen (14-18) zu erzeugen, umfassend die folgenden Schritte:
a) Ablegen von mindestens einer Zwischenschicht (54, 98, 100) und mindestens einer Verstärkungsschicht (50) in den Vertiefungen (36) in mindestens einigen Regionen, wobei die mindestens eine Verstärkungsschicht (50) vor mindestens einem Knotenpunkt (22, 24, 70, 78, 90-96) durchtrennt und hinter dem Knotenpunkt (22, 24, 70, 78, 90-96) in der Region der Nut (38) wieder instandgesetzt wird, oder dass mindestens eine Vertiefung (114, 116) in die mindestens eine Zwischenschicht (54, 98, 100) in der Region des mindestens einen Knotenpunkts (22, 24, 70, 78, 90-96) in mindestens einigen Regionen eingebracht wird,
b) Wiederholen von Schritt a), bis die Vertiefungen (36) mindestens teilweise mit Zwischenschichten (54, 98, 100) und Verstärkungsschichten (50) gefüllt sind, um die Versteifungsrippen (14-18) mit integralen Verbindungsfüßen (60, 62, 106-112) zu bilden,
c) Bestücken des Formungswerkzeugs (32), insbesondere mit Zwischenschichten (54, 98,100) und/oder Verstärkungsschichten (50), zum Zweck der Herstellung der Haut (28), und
d) Härten und/oder Verfestigen der Zwischenschichten (54, 98, 100) und Verstärkungsschichten (50), wobei die mindestens eine Vertiefung (36) mit einer Nut (38) mit zwei Seitenwänden (40, 42) gebildet ist und eine Nutrandzone (44, 46) in mindestens einigen Segmenten an mindestens einer Seitenwand (40, 42) befestigt ist, wobei die Nuten eine ungefähr trapezförmige Querschnittgeometrie aufweisen, während die Nutrandzonen, die spiegelbildlich auf den beiden Seiten der Nuten gebildet sind, eine ungefähr dreieckige oder keilförmige Querschnittgeometrie aufweisen und die Nutrandzonen einen sanften, d. h. stufenlosen, Übergang zu einer Oberfläche des Formungswerkzeugs eingehen, wobei die Verstärkungsschichten (50) in der Nut (38) abgelegt werden und die Zwischenschichten (54, 98, 100) in der Nut (38) und in mindestens einer benachbarten Nutrandzone (44, 46) abgelegt werden, wobei die Versteifungsrippen (14-18) so gebildet werden, dass eine Vielzahl von Verstärkungsschichten (50) und Zwischenschichten (54, 98, 100) übereinander abgelegt werden.

2. Verfahren nach Anspruch 1, **dadurch gekennzeichnet, dass** die Verstärkungsschichten (50) unter mechanischer Belastung in den Nuten (38) abgelegt werden, und/oder die Zwischenschichten (54, 98, 100) in der Region der Nutrandzonen (44, 46) fixiert werden.

3. Verfahren nach Anspruch 1 oder 2, **dadurch gekennzeichnet, dass** die mindestens eine Verstärkungsschicht (50) den mindestens einen Knotenpunkt (22, 24, 70, 78, 90-96) unzertrennt durchläuft.

4. Verfahren nach einem der Ansprüche 1 bis 3, **dadurch gekennzeichnet, dass** die Verstärkungsschichten (50) mit einem Halbfertigprodukt in Strangform gebildet werden, das mit einem faserverstärkten Kunststoffmaterial und/oder mit einem Metallmaterial gebildet ist.

5. Verfahren nach einem der Ansprüche 1 bis 4, **dadurch gekennzeichnet, dass** die Zwischenschichten (54, 98, 100) mit einem Halbfertigprodukt in Bahnform gebildet werden, das mit einem faserverstärkten Kunststoffmaterial und/oder mit einem Metallmaterial gebildet ist, und das eine Breite aufweist, die eine Bedeckung der Nuten (38) und der Nutrandzonen (44, 46) in mindestens einigen Regionen zulässt.

6. Leichtbaustruktur (10), wobei die Leichtbaustruktur (10) nach dem Verfahren von Beispiel 1 hergestellt ist, insbesondere eine Rumpftonnen- oder Mantelkomponente eines Flugzeugs, die mit einem faserverstärkten Kunststoff mittels eines Formungswerkzeugs (32) gebildet ist, wobei die integral verstärkte Leichtbaustruktur (10) eine Vielzahl von Versteifungsrippen (14-18) aufweist, die einander an Knotenpunkten (22, 24, 70, 78, 90-96) kreuzen, **dadurch gekennzeichnet, dass** die Versteifungsrippen (14-18) integral konzipierte Verbindungsfüße (60, 62, 106-112) zum Zweck des Befestigens an einer Haut (28) aufweisen,
wobei die Versteifungsrippen (14-18) mit einer Vielzahl von Verstärkungsschichten (50) und Zwischenschichten (54, 98, 100) gebildet sind, die übereinander abgelegt sind, wobei die mindestens eine Verstärkungsschicht (50) vor mindestens einem Knotenpunkt (22, 24, 70, 78, 90-96) durchtrennt wird und hinter dem Knotenpunkt (22, 24, 70, 78, 90-96) in der Region der Nut (38) instandgesetzt wird, oder dass
mindestens eine Vertiefung (114, 116) in die mindestens eine Zwischenschicht (54, 98, 100) in der Region des mindestens einen Knotenpunkts (22, 24, 70, 78, 90-96) in mindestens einigen Regionen eingebracht wird.

7. Leichtbaustruktur (10) nach Anspruch 6, **dadurch gekennzeichnet, dass** die Verstärkungsschichten (50) mit einem Halbfertigprodukt (52) in Strangform gebildet sind, das mit einem faserverstärkten Kunststoffmaterial mit einer Faserorientierung von ungefähr 0° in Bezug auf die Längsachse des Halbfertigprodukts (52) in Strangform und/oder mit einem Metallmaterial gebildet ist, und die Zwischenschichten (54, 98, 100) mit einem Halbfertigprodukt (56) in Bahnform gebildet sind, das mit einem faserverstärkten Kunststoffmaterial mit Faserorientierungen zwischen -90° und +90° in Bezug auf die Längsachse des Halbfertigprodukts (52) und/oder mit einem Metallmaterial gebildet ist.

## Revendications

1. Procédé de fabrication d'une structure légère renforcée de manière intégrée (10) avec une matière plastique renforcée par des fibres, en particulier d'un tube de fuselage ou d'un élément de coque d'un avion, au moyen d'un outil de moulage (32), la structure légère (10) ayant une multiplicité de nervures de renforcement (14-18) se croisant les unes les autres aux points nodaux (22, 24, 70, 78, 90-96), une peau (28) étant fixée aux nervures de renforcement (14-18) et l'outil de moulage (32) ayant une multiplicité de dépressions (36) de type canal pour la création des nervures de renforcement (14-18), comprenant les étapes suivantes :
a) dépôt, dans au moins certaines régions, d'au moins une couche intermédiaire (54, 98, 100) et d'au moins une couche de renforcement (50), dans les dépressions (36), l'au moins une couche de renforcement (50) étant sectionnée avant au moins un point nodal (22, 24, 70, 78, 90-96) et derrière le point nodal (22, 24, 70, 78, 90-96) dans la région de la rainure (38) étant restaurée, ou au moins un évidement (114, 116) étant introduit dans l'au moins une couche intermédiaire (54, 98, 100) dans la région de l'au moins un point nodal (22, 24, 70, 78, 90-96) dans au moins certaines régions,
b) répétition de l'étape a) jusqu'à ce que les dépressions (36) soient au moins partiellement remplies de couches intermédiaires (54, 98, 100) et de couches de renforcement (50) pour la formation des nervures de renforcement (14-18) avec des pieds de liaison intégrés (60, 62, 106-112),
c) remplissage de l'outil de moulage (32), en particulier avec des couches intermédiaires (54, 98, 100) et/ou des couches de renforcement (50), pour la fabrication de la peau (28), et
d) durcissement et/ou solidification des couches intermédiaires (54, 98, 100) et des couches de renforcement (50), l'au moins une dépression (36) étant formée avec une rainure (38) avec deux parois latérales (40, 42) et une zone de bord de rainure (44, 46) étant fixée au moins par endroits à au moins une paroi latérale (40, 42), les rainures ayant une géométrie de section transversale approximativement trapézoïdale tandis que les zones de bord de rainure formées en images miroir sur les deux côtés des rainures ont une géométrie de section transversale approximativement triangulaire ou cunéiforme, et les zones de bord de rainure subissant une transition lisse, c'est-à-dire continue dans une surface de l'outil de moulage, les couches de renforcement (50) étant déposées dans la rainure (38) et les couches intermédiaires (54, 98, 100) étant déposées dans la rainure (38) et dans l'au moins une zone de bord de rainure adjacente (44, 46), les nervures de renforcement (14-18) étant formées avec une multiplicité de couches de renforcement (50) et de couches intermédiaires (54, 98, 100) déposées les unes sur les autres.

2. Procédé selon la revendication 1, **caractérisé en ce que** les couches de renforcement (50) sont déposées dans les rainures (38) sous contrainte mécanique et/ou les couches intermédiaires (54, 98, 100) sont fixées dans la région des zones de bord de rainure (44, 46).

3. Procédé selon la revendication 1 ou 2, **caractérisé en ce que** l'au moins une couche de renforcement (50) passe à travers l'au moins un point nodal (22, 24, 70, 78, 90-96) sans être coupée.

4. Procédé selon l'une des revendications 1 à 3, **caractérisé en ce que** les couches de renforcement (50) sont formées avec un produit semi-fini en forme de brin, qui est formé avec une matière plastique renforcée par des fibres et/ou avec un matériau métallique.

5. Procédé selon l'une des revendications 1 à 4, **caractérisé en ce que** les couches intermédiaires (54, 98, 100) sont formées avec un produit semi-fini en forme de bande, qui est formé avec une matière plastique renforcée par des fibres et/ou avec une matière métallique, et qui a une largeur qui permet un recouvrement des rainures (38) et des zones de bord de rainure (44, 46) dans au moins certaines régions.

6. Structure légère (10), la structure légère (10) étant fabriquée conformément au procédé selon la revendication 1, en particulier un tube de fuselage ou un élément de coque d'un avion, qui est formé avec une matière plastique renforcée par des fibres au moyen d'un outil de moulage (32), la structure légère renforcée de manière intégrée (10) ayant une multiplicité de nervures de renforcement (14-18) se croisant les unes les autres aux points nodaux (22, 24, 70, 78, 90-96), **caractérisée en ce que** les nervures de renforcement (14-18) ont des pieds de connexion (60, 62, 106-112) conçus de manière intégrée pour la fixation à une peau (28), les nervures de renforcement (14-18) étant formées avec une multiplicité de couches de renforcement (50) et de couches intermédiaires (54, 98, 100) déposées les unes sur les autres, la couche de renforcement (50) au moins étant sectionnée avant au moins un point nodal (22, 24, 70, 78, 90-96) et derrière le point nodal (22, 24, 70, 78, 90-96) dans la région de la rainure (38) étant restauré, ou au moins un évidement (114, 116) étant introduit dans l'au moins une couche intermédiaire (54, 98, 100) dans la région de l'au moins un point nodal (22, 24, 70, 78, 90-96) dans au moins certaines régions.

7. Structure légère (10) selon la revendication 6, **caractérisée en ce que** les couches de renforcement (50) sont formées avec un produit semi-fini en forme de brin (52), qui est formé avec une matière plastique renforcée par des fibres avec une orientation des fibres d'environ 0° par rapport à l'axe longitudinal du produit semi-fini en forme de brin (52) et/ou avec un matériau métallique, et les couches intermédiaires (54, 98, 100) sont formées avec un produit semi-fini en forme de bande (56), qui est formé avec une matière plastique renforcée par des fibres avec des orientations de fibres comprises entre -90° et +90° par rapport à l'axe longitudinal du produit semi-fini (52), et/ou avec un matériau métallique.
